# EUROPÄISCHE PATENTSCHRIFT

(11) **EP 4 714 685 B1**
(45) Veröffentlichungstag und Bekanntmachung des Hinweises auf die Patenterteilung: **11.11.2026**
(21) Anmeldenummer: 25202447.6
(22) Anmeldetag: 16.09.2025
(51) Int. Cl.: B60C 23/00

(54) **DREHDURCHFÜHRUNG ALS TEIL EINER REIFENDRUCKREGELANLAGE EINES FAHRZEUGES SOWIE DAMIT AUSGERÜSTETES FAHRZEUG**
ROTARY FEEDTHROUGH FORMING PART OF A TYRE PRESSURE CONTROL SYSTEM OF A VEHICLE AND VEHICLE EQUIPPED THEREWITH
PASSAGE TOURNANT FAISANT PARTIE D'UN SYSTÈME DE RÉGLAGE DE LA PRESSION DES PNEUS D'UN VÉHICULE ET VÉHICULE AINSI ÉQUIPÉ

(30) Priorität: 23.09.2024 DE 202024105459 U
(43) Veröffentlichungstag der Anmeldung: 25.03.2026
(73) Patentinhaber: PTG Reifendruckregelsysteme GmbH, 41468 Neuss (DE)
(72) Erfinder: MÜNCH, Tim, 41468 Neuss (DE); GIESEN, Markus, 41468 Neuss (DE)
(74) Vertreter: Haverkamp Patentanwälte PartG mbB

(56) Entgegenhaltungen:
- WO-A1-2011/090787
- US-A1- 2018 056 732

## Beschreibung

Gegenstand der Erfindung ist eine Drehdurchführung als Teil einer Reifendruckregelanlage eines Fahrzeuges, umfassend eine drehmomentschlüssig an eine ein Rad tragende Achswelle des Fahrzeuges anschließbare Rotorbaugruppe und eine gegenüber der Rotationsbewegung der Rotorbaugruppe ortsfest angeordnete Statorbaugruppe, wobei sich zwischen der Rotorbaugruppe und der Statorbaugruppe zumindest ein abgedichteter oder abdichtbarer ringförmiger Übertragungskanal befindet, durch den für die Zwecke einer Reifendruckregelung eine Wegsamkeit zum Übertragen eines Gases von der Statorbaugruppe an die Rotorbaugruppe und/oder umgekehrt bereitgestellt ist. Gegenstand der Erfindung ist ferner ein luftbereiftes Fahrzeug, ausgerüstet mit Drehdurchführungen einer solchen Reifendruckregelanlage.

Reifendruckregelanlagen werden bei Kraftfahrzeugen, etwa bei Nutzfahrzeugen, wie Lastkraftwagen, Schleppern oder Erdbewegungsmaschinen eingesetzt, um den in dem Reifen befindlichen Reifendruck an unterschiedliche Betriebssituationen des Kraftfahrzeuges anpassen zu können. Eine Reifendruckanpassung erfolgt vornehmlich in Abhängigkeit von dem zu befahrenden Untergrund und/oder der Beladung. Durch den Reifendruck kann die Aufstandsfläche des Reifens verändert werden. Ein Reifen weist bei einem geringeren Reifendruck eine größere Aufstandsfläche auf als mit höherem Reifendruck. Aus diesem Grunde wird man bei weichem Untergrund lieber mit einem geringeren Reifendruck und mit höherer Aufstandsfläche fahren als auf einer befestigten Fahrbahn. Der Reifendruck kann auch in Abhängigkeit von dem jeweiligen Beladungszustand geändert werden.

Derartige Reifendruckregelanlagen verfügen über eine Drehdurchführung, um zum Erhöhen des Reifeninnendruckes Druckluft von einer fahrzeugseitigen Druckluftquelle an das drehbar gelagerte Rad zu übertragen. Eine solche Drehdurchführung umfasst eine fahrzeugseitig angeordnete Statorbaugruppe und eine durch einen Bewegungsspalt von dieser getrennte, radseitig angeordnete Rotorbaugruppe. Beide Baugruppen sind je nach Ausgestaltung der Drehdurchführung entweder axial oder radial zueinander angeordnet. Radseitig ist an den Rotor der Drehdurchführung eine zur Felge des Rades führende Luftleitung vorgesehen. Diese durchgreift die Felge in einer Öffnung und mündet in das Reifeninnere. In die radseitige Luftleitung ist typischerweise ein ansteuerbares Ventil eingeschaltet, welches für den Vorgang der Reifendruckregelung geöffnet und nach Abschluss des Vorganges geschlossen ist. Die Druckluft selbst wird mit einem fahrzeugseitig angeordneten Kompressor bereitgestellt. Als Kompressor dient typischerweise der bei Nutzfahrzeugen ohnehin zum Betreiben der Bremsanlage vorhandene Kompressor.

Aus EP 2 586 630 B1 ist eine Drehdurchführung mit den Merkmalen des Oberbegriffs des Anspruchs 1 bekannt, die in einfacher Weise an eine ein Rad tragende Achswelle montiert werden kann und die einen geringeren Bauraum in axialer Richtung aufweist. Die Rotorbaugruppe und die Statorbaugruppe dieser Drehdurchführung befinden sich in einer radialen Anordnung zueinander. Zum Anschließen der Rotorbaugruppe an die Achswelle dient ein drehmomentschlüssig mit der Achswelle verspannbarer Spannring. Weitere Drehdurchführungen sind bekannt aus US 2018/056732 A1 und WO 2011/090787 A1.

Derartige Drehdurchführungen mit einer radialen Anordnung von Statorbaugruppe und Rotorbaugruppe befinden sich vielfach in einer innenliegenden Anordnung zu dem von der Achswelle getragenen Rad, befinden sich mithin zwischen dem Rad und einem Achsrichter. Zunehmend höhere Belastungen der Achsen und damit der Achswellen der Fahrzeuge, die mit Reifendruckregelanlagen unter Verwendung derartiger Drehdurchführungen ausgerüstet sind, können Achsverformungen bzw. Achswellenverformungen zufolge haben, was mitunter zu einer radialen Verschiebung der Drehachse der Achswellen und damit zu einer Achswellenverformungsexzentrizität führt. Aufgrund der radialen Anordnung von Rotorbaugruppe und Statorbaugruppe mit den zwischen diesen Baugruppen befindlichen Wegsamkeiten für eine Gasübertragung (Luftübertragung) kann dieses zu Leckagen an den zwischen Rotorbaugruppe und Statorbaugruppe befindlichen Dichtungen oder auch zu Beschädigungen derselben führen. Auch kann in einem solchen Fall ein gewisses Wandern der Rotorbaugruppe auf der Achswelle auftreten, was wiederum zu Funktionsbeeinträchtigungen oder gar zum Funktionsausfall einer solchen Drehdurchführung führen kann.

Der Erfindung liegt daher die Aufgabe zugrunde, eine Drehdurchführung der eingangs genannten Art dergestalt weiterzubilden, dass die Drehdurchführung unempfindlich gegenüber unter Umständen auftretenden Achsverformungsexzentrizitäten ist.

Gelöst wird diese Aufgabe erfindungsgemäß durch eine eingangs genannte, gattungsgemäße Drehdurchführung, bei der die Rotorbaugruppe ein mit radialem Abstand zur Mantelfläche der Achswelle angeordnetes Rotorteil mit der oder den rotorseitigen, für die Drehübertragung eines Gases erforderlichen Wegsamkeiten sowie einen drehmomentschlüssig an die Achswelle anschließbaren, zur Übertragung einer Drehbewegung von der Achswelle auf das Rotorteil und mit diesem in radialer Richtung schwimmend in Eingriff gestellten Mitnehmer umfasst und bei der das Rotorteil mittels eines zwischen der Statorbaugruppe und dem Rotorteil mit axialem Abstand zu dem Mitnehmer angeordneten Lagers gegenüber der Statorbaugruppe zentriert ist.

Bei dieser Drehdurchführung ist die Rotorbaugruppe mehrteilig ausgeführt und umfasst ein mit radialem Abstand zu der Mantelfläche der Achswelle ausgelegtes Rotorteil und einen Mitnehmer, durch den die Rotation der Achswelle auf den Rotor übertragen wird. Dieser radiale Abstand ist vorzugsweise etwas größer bemessen als die größte auszugleichende Achsverformungsexzentrizität. Der Mitnehmer ist drehmomentschlüssig auf die Achswelle anschließbar bzw. bei an einem Fahrzeug montierter Drehdurchführung an eine Achswelle angeschlossen. Vorteilhaft ist, die Drehmomentübertragung von der Achswelle auf den Mitnehmer über eine formschlüssige Verbindung dieser beiden Teile zu bewirken. Dann kann der Mitnehmer auf die Achswelle aufgeschoben werden und es besteht die Möglichkeit, dass in axialer Richtung der Mitnehmer mit einem gewissen Spiel beweglich bleibt und nicht arretiert ist. Der Abtrieb des Mitnehmers zum Übertragen der Rotationsbewegung auf das Rotorteil ist in radialer Richtung schwimmend und somit von Achsverformungsexzentrizitäten entkoppelt ausgeführt. Achsverformungsexzentrizitäten werden daher von dem Mitnehmer nicht an das Rotorteil übertragen, womit die Drehdurchführung unempfindlich gegenüber unter Umständen auftretenden Exzentrizitäten der Achswelle ist. Zentriert ist das Rotorteil gegenüber der Statorbaugruppe durch ein in radialer Richtung zwischenliegendes Lager, das vorzugsweise als Wälzkörperlager, insbesondere als Kugellager ausgeführt ist. Das Vorsehen eines solchen Lagers macht eine Zentrierung der Rotorbaugruppe auf der Achswelle obsolet und ermöglicht somit die radial schwimmende Kopplung von Rotorbaugruppe und Mitnehmer. Infolge der schwimmenden Lagerung der kinematischen Kopplung zwischen dem Mitnehmer und dem Rotorteil werden bei auftretenden Achsverformungsexzentrizitäten oder aufgrund anderweitig bedingter Achs- bzw. Achswellenexzentrizitäten keine durch Kippung bedingte Kräfte und Momente auf das Rotorteil übertragen, sodass die zwischen dem Rotorteil und der Statorbaugruppe befindlichen Dichtungen zum Begrenzen der Fluidwegsamkeiten auch bei auftretenden Achsexzentrizitäten keiner zusätzlichen Belastung ausgesetzt sind.

Der drehmomentschlüssige Anschluss des Mitnehmers an die Achswelle erfolgt in radialer Richtung spielfrei und kann auf unterschiedliche Weise bereitgestellt werden. In einem bevorzugten Ausführungsbeispiel weist die Achswelle ein oder mehrere Drehmitnahmekonturen auf. In maßlicher und geometrischer Anpassung an diese verfügt der Mitnehmer über eine Achswellenaussparung mit komplementärer Umrissgeometrie. Bei einer solchen Ausgestaltung kann der Mitnehmer auf die Achswelle in einfacher Weise aufgeschoben werden. Zudem kann bei einer solchen Ausgestaltung der Mitnehmer auch mit einem gewissen axialen Bewegungsspielraum kinematisch an das Rotorteil angeschlossen sein. Ein gewisses axiales Spiel des Mitnehmers gegenüber der Achswelle unterstützt den mit dieser Drehdurchführung gewünschten Entkopplungseffekt zwischen Mitnehmer und Rotorteil.

Der kinematische Anschluss des Mitnehmers an das Rotorteil ist gemäß einem bevorzugten Ausführungsbeispiel dadurch bereitgestellt, dass einer der beiden miteinander zu koppelnden Teile - Mitnehmer bzw. Rotorteil - eine zu dem jeweils anderen Teil - Rotorteil bzw. Mitnehmer - hin offene Koppelaussparung aufweist. In diese greift ein nach Art eines Kulissensteins ausgelegtes Führungselement des jeweils anderen Teils ein. Das Führungselement ist darauf ausgelegt, mit seinen in die beiden entgegengesetzten Rotationsrichtungen weisenden Seitenflächen die Bewegung des Mitnehmers oder des Rotorteils aufzunehmen und weiterzugeben. Wesentlich ist, dass das Führungselement in radialer Richtung beweglich in der Koppelaussparung angeordnet ist. Somit ist die radiale Erstreckung der Koppelaussparung größer als die radiale Erstreckung des Führungselementes. Vorzugsweise ist in mittiger Ausrichtung das radiale Spiel des Führungselementes in der Koppelaussparung in beide radialen Richtungen größer als die zu erwartende maximale Achswellenverformungsexzentrizität. Die Ineingriffstellung des Führungselementes in die Koppelaussparung ist vorzugsweise dergestalt eingerichtet, dass, wenn die Drehachse der Achswelle und diejenige des Rotorteils homoaxial sind, mithin eine Achsexzentrizität nicht vorliegt, das Führungselement in der Koppelaussparung mittig oder etwa mittig angeordnet ist, sodass dieses in radialer Richtung in gleichem Maße sowohl in Richtung zur Drehachse als auch in umgekehrter Richtung beweglich ist. In Rotationsrichtung ist zwischen dem Führungselement und den die Koppelaussparung begrenzenden Wänden vorzugsweise nur so viel Spiel vorhanden, dass die radiale Beweglichkeit des Führungselementes in der Koppelaussparung gewährleistet ist.

Als Führungselement kann beispielsweise ein Stift dienen, der in einer langlochartig ausgeführten Koppelaussparung geführt ist. Vorteilhaft ist es, wenn das Führungselement ungekrümmte oder zumindest weitgehend ungekrümmte, in die Rotationsrichtungen weisende Seitenflächen aufweist, über die die Drehbewegung übertragen wird. So ist sichergestellt, dass die Flächenpressung im Kontakt zum Mitnehmer deutlich niedriger ist die maximal ertragbare Flächenpressung. Typischerweise wird man die Drehmomentkopplung zwischen dem Mitnehmer und dem Rotorteil so auslegen, dass der radiale Anteil sämtlicher Mitnehmerbewegungen infolge auftretender Achswellenverformungsexzentrizitäten kompensiert werden. Zu diesem Zweck ist in einem bevorzugten Ausführungsbeispiel vorgesehen, dass das in die Koppelaussparung eingreifende Führungselement schwenkbar gelagert ist, was beispielsweise durch eine Anordnung des Führungsstücks auf einer Hülse oder einem Bolzen ermöglicht werden kann.

In axialer Richtung ist der Mitnehmer gemäß einem Ausführungsbeispiel durch einen Bolzen an das Rotorteil angeschlossen. Dieser Anschluss erfolgt vorzugsweise mit axialem Spiel, worauf vorstehend bereits hingewiesen ist. An der dem Rotorteil gegenüberliegenden Seite dient beispielsweise eine Scheibe zur axialen Fixierung bzw. axialen Beweglichkeitsbegrenzung. Zwischen dem Mitnehmer und der zu dem Mitnehmer weisenden Stirnseite des Rotorteils ist typischerweise eine Ringscheibe eingeschaltet, um Abnutzungserscheinungen am Rotorteil zu vermeiden. In einem Ausführungsbeispiel dient eine solche Ringscheibe auch zum rotorteilseitigen Begrenzen des axialen Spiels des Mitnehmers.

Gemäß einer bevorzugten Ausgestaltung ist der Mitnehmer der Rotorbaugruppe als Scheibe, insbesondere als nicht rotationssymmetrische Scheibe mit einer Langachse und einer Kurzachse, mit einer zentrisch angeordneten Achswellenaussparung ausgeführt, mit der diese formschlüssig auf eine mit zumindest einer Drehmitnahmekontur ausgelegten Achswelle aufsteckbar ist.

Eine Übertragung der Rotationsbewegung von dem Mitnehmer auf das Rotorteil erfolgt vorzugsweise nur an in Umfangsrichtung gesehen einer Position. Der Mitnehmer, der sich ausgehend von seinem Anschluss an die Achswelle in Richtung zu der Koppelaussparung oder dem Führungselement und an diametral bezüglich seiner Rotationsachse gegenüberliegenden Seite ebenfalls erstreckt, ist bezüglich seiner axialen Beweglichkeit nicht nur im Bereich des Führungselementes, sondern auch in seiner diametral gegenüberliegenden Erstreckung begrenzt. Während auf der einen Seite das Rotorteil bzw. ein ggf. zwischen das Rotorteil und dem Mitnehmer eingeschaltetes Abstandsstück, beispielsweise ausgeführt als Ringscheibe, dient, dient zur Begrenzung der axialen Beweglichkeit des Mitnehmers gegenüber dem Rotorteil auf der dem Rotorteil gegenüberliegenden Seite auch an dem der Kraftübertragung gegenüberliegenden Seite eine von einem Bolzen gehaltene Scheibe. Dieser Bolzen durchgreift eine Bolzendurchgriffsöffnung des Mitnehmers. Die lichte Weite dieser Bolzendurchgriffsöffnung ist hinreichend weit bemessen, damit die in dem vorgegebenen Maße ermöglichte Achswellenexzentrizitätskompensation nicht beeinträchtigt ist.

Die Drehdurchführung selbst kann ein- oder auch mehrkanalig ausgeführt sein. Die Dichtungen zum Bereitstellen der Fluidwegsamkeit können entweder permanent wirkend oder aktivierbar sein. Über welchen Mechanismus eine mögliche Aktivierung erfolgt, ist im Zusammenhang mit der erfindungsgemäßen Drehdurchführung unerheblich.

Nachfolgend ist die Erfindung anhand eines in den beiliegenden Figuren gezeigten Ausführungsbeispiels erläutert. Es zeigen:
- **Fig. 1:**: eine schematisierte Schnittdarstellung eines auf einer Achswelle montierten Luftrades eines im Übrigen nicht näher dargestellten Kraftfahrzeuges mit einer auf der Achswelle montierten Drehdurchführung,
- **Fig. 2:**: eine perspektivische Darstellung der Drehdurchführung der Figur 1,
- **Fig. 3:**: eine Frontseitenansicht auf die Drehdurchführung der Figur 2 mit Blickwinkel auf das Ende der Achswelle in Richtung zur Drehdurchführung,
- **Fig. 4:**: eine Schnittdarstellung durch die Drehdurchführung der Figur 3 entlang der Schnittlinie A - A,
- **Fig. 5:**: eine vergrößerte Darstellung des in Figur 4 gezeigten Ausschnittes X,
- **Fig. 6:**: eine vergrößerte Darstellung des in Figur 4 gezeigten Ausschnittes Y,
- **Fig. 7:**: ein Querschnitt durch die Drehdurchführung der vorstehenden Figuren in der Ebene des drehmomentschlüssig an die Achswelle angeschossenen Mitnehmers als Teil der Rotorbaugruppe und
- **Fig. 8:**: eine vergrößerte Darstellung des in Figur 7 gezeigten Ausschnittes Z.

Ein Luftreifen 1 ist auf einer Achswelle 2 montiert und drehmomentschlüssig in an sich bekannter Weise mit dieser verbunden. Die Achswelle 2 erstreckt sich in einen in Richtung zum Chassis des die Achswelle 2 tragenden Fahrzeuges angeordneten angedeuteten Achsrichter 3. Das Fahrzeug verfügt über eine Reifendruckregelanlage, von der in der Figur lediglich die Drehdurchführung 4 dargestellt ist. Über die Drehdurchführung 4 ist eine Luftwegsamkeit bereitgestellt, um entsprechend der gewünschten Bedürfnisse den Luftdruck im Luftreifen 1 zu erhöhen oder zu erniedrigen. Die Drehdurchführung 4 umfasst eine Statorbaugruppe 5. Diese ist bei dem dargestellten Ausführungsbeispiel drehmomentschlüssig und ortsfest an den Achsrichter 3 angeschlossen, typischerweise an diesen angeflanscht ist. In einer radialen Anordnung zu der Statorbaugruppe 5 befindet sich eine Rotorbaugruppe 6, die an die Rotationsbewegung der Achswelle 2 gekoppelt ist. Die Statorbaugruppe 5 verfügt über die erforderlichen Anschlüsse zum Anschließen der Luftleitungen. Die Rotorbaugruppe 6 verfügt über mehrere Luftanschlüsse, über die die Fluidwegsamkeit der Drehdurchführung 4 mit dem Inneren des Luftreifens 1, typischerweise seinem Radventil verbunden ist. Die Rotorbaugruppe 6 verfügt über einen Rotorteil 7, das mit seiner zur Achswelle 2 weisenden Innenseite von der Mantelfläche der Achswelle 2 beabstandet ist. Der Rotorbaugruppe 6 zugehörig ist ferner ein als Scheibe bei dem dargestellten Ausführungsbeispiel ausgebildeter Mitnehmer 8. Dieser ist drehmomentschlüssig und bei dem dargestellten Ausführungsbeispiel mittels eines Formschlusses an die Achswelle 2 angeschlossen und dient zum Übertragen einer Rotationsbewegung der Achswelle 2 und damit des Luftreifens 1 auf das Rotorteil 7.

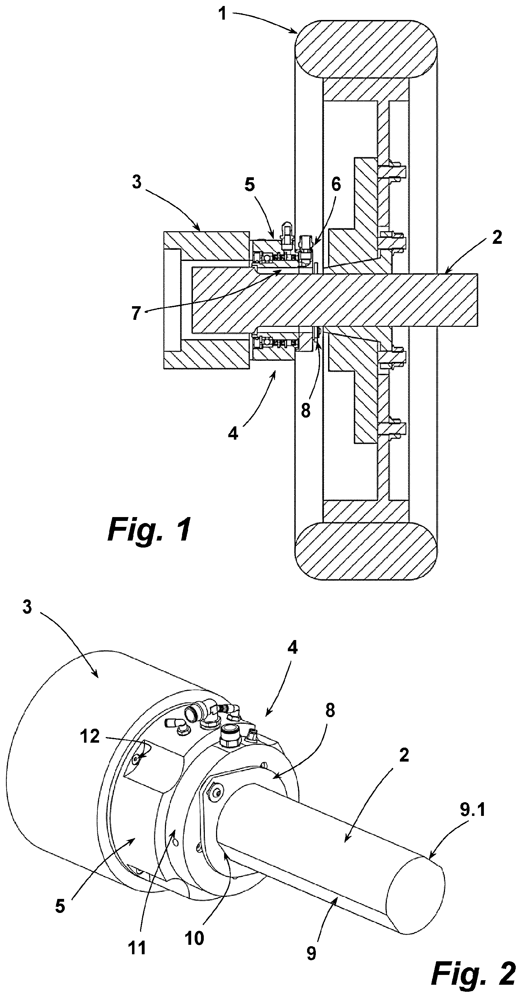

Die Achswelle 2 verfügt über zwei flächige Drehmitnahmekonturen 9, 9.1 (s. Figur 2). Die Ebenen der Drehmitnahmekonturen 9, 9.1 sind mit einem spitzen Winkel zueinander angeordnet, verlaufen bei dem dargestellten Ausführungsbeispiel somit nicht parallel zueinander. Diese Drehmitnahmekonturen 9, 9.1 dienen zum formschlüssigen Anschließen des Mitnehmers 8 sowie des Luftreifens 1 an die Achswelle 2. Der als Scheibe ausgebildete Mitnehmer 8 verfügt über eine Achswellenaussparung 10, deren Innenkontur der äußeren Umrisskontur der Achswelle 2 entspricht. Von dem Rotorteil 7 der Rotorbaugruppe 6 ist in der perspektivischen Ansicht dieser Figur ein der Rotorbaugruppe 6 zugehöriger Anschlussring 11 erkennbar. Dieser trägt die rotorseitigen Anschlüsse und enthält die rotorteilseitigen Fluidwegsamkeiten. Gut zu erkennen sind in Figur 2 auch die entsprechenden Fluidanschlüsse der Statorbaugruppe 5. Die Statorbaugruppe 5 ist mittels über den Umfang verteilt angeordneten Spannbolzen 12 an die zu dem Luftreifen 1 weisende Stirnfläche des Achsrichters 3 angeschlossen.

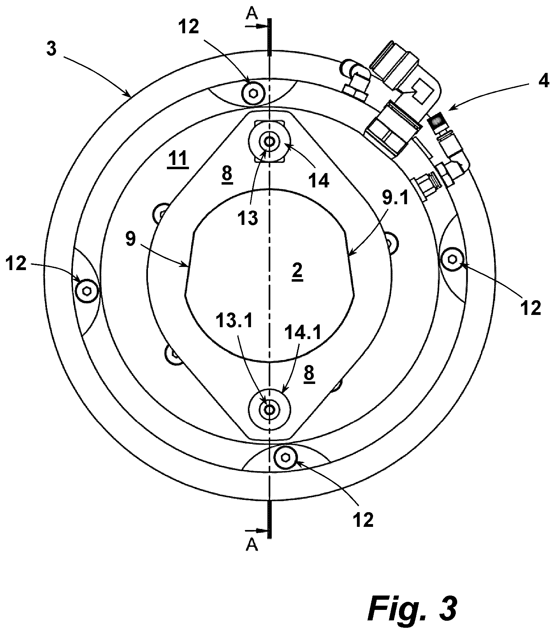

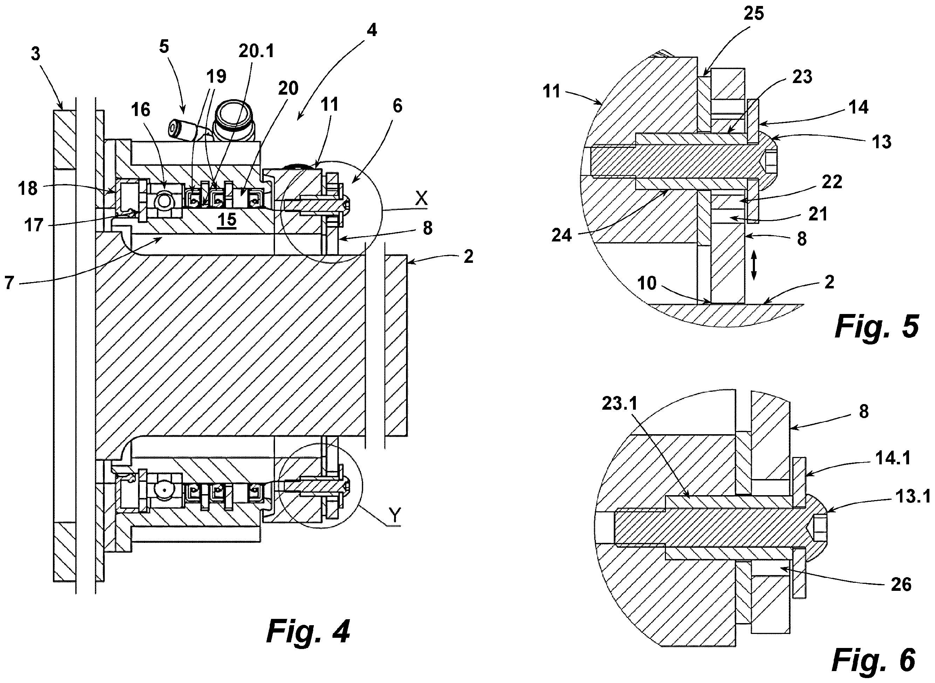

Der Mitnehmer 8 ist auf die Achswelle 2 aufgeschoben und mittels Bolzen 13, 13.1 (s. Figur 3) an das Rotorteil 7 mit einem gewissen axialen Spiel angeschlossen (s. auch Figur 4). Unterhalb ihres Bolzenkopfes tragen die Bolzen 13, 13.1 jeweils eine Scheibe 14, 14.1 zur Begrenzung eines axialen Spiels, mit dem der Mitnehmer 8 an dem Rotorteil 7 bzw. seinem Anschlussring 11 gehalten ist.

Das mit seiner radial nach innen weisenden Mantelfläche mit Abstand zur Mantelfläche der Achswelle 2 angeordnete Rotorteil 7 verfügt neben dem Anschlussring 11 über eine Rotorhülse 15. Diese ist konzentrisch innenliegend zu der Statorbaugruppe 5 angeordnet. Der Anschlussring 11 und die Rotorhülse 15 bilden als Rotorteil 7 eine Einheit und sind drehmomentschlüssig in einer nicht dargestellten Weise miteinander verbunden. Die Rotorhülse 15 und damit das Rotorteil 7 ist über ein zwischen der Statorbaugruppe 5 und der hierzu innenliegenden Rotorbaugruppe 6 befindliches Lager 16 zentriert. Bei dem dargestellten Ausführungsbeispiel handelt es sich bei dem Lager 16 um ein Kugellager. An den zueinander weisenden Seiten von Statorbaugruppe 5 und Rotorhülse 15 befindet sich jeweils eine Aussparung als Lagersitz. Die hierdurch gebildeten Absätze in Richtung zum Anschlussring 11 dienen als Anschlag für das Lager 16. In Richtung zu dem Achsrichter 3 ist das Lager 16 durch eine Sicherungsscheibe 17 gehalten und zusätzlich durch eine Dichtung 18 in dieser Richtung abgedichtet. Zwischen der Statorbaugruppe 5 und dem Achsrichter 3 ist ein Adapterring eingeschaltet, durch den auch die Dichtung 18 fixiert ist.

Ein zwischen der Statorbaugruppe 5 und der Rotorbaugruppe 6 bzw. seiner Rotorhülse 15 angeordneter Luftübertragungsspalt ist durch mehrere umlaufende Dichtungen 19 in einzelne Luftübertragungskanäle 20, 20.1 unterteilt. Die Dichtungen 19 dienen zum Abdichten der Luftübertragungskanäle 20, 20.1 zur Luftübertragung von der Statorbaugruppe 5 an die Rotorbaugruppe 6 oder umgekehrt. Die Luftübertragungskanäle 20, 20.1 setzen sich fort in axiale Übertragungskanäle zum Übertragen von Luft aus den Luftübertragungskanälen 20, 20.1 in die entsprechenden Luftwegsamkeiten in dem Anschlussring 11 und zu den rotorbaugruppenseitigen Luftanschlüssen. Die diesbezüglichen Maßnahmen sind von herkömmlichen Drehdurchführungen, wie beispielsweise in EP 2 586 630 B1 beschrieben, bekannt und bedürfen daher an dieser Stelle keiner weiteren Erläuterungen.

Die Drehmomentübertragung von dem Mitnehmer 8 auf den Anschlussring 11 der Rotorbaugruppe 6 erfolgt in radialer Richtung schwimmend. Somit ist die Rotorbaugruppe 6 von möglichen Radialbewegungen des Mitnehmers 8 entkoppelt. Radialbewegungen des Mitnehmers 8 können bei Achswellenverformungen, etwa infolge einer hohen Achsbelastung auftreten. Zur Übertragung der Rotationsbewegung der Achswelle 2 auf das Rotorteil 7 verfügt der Mitnehmer 8 über eine Koppelaussparung 21, in der ein Führungselement 22 angeordnet ist. Dem Führungselement 22 kommt in radialer Richtung die Funktion eines Kulissensteins zu. Das Führungselement 22 ist in dieser Richtung beweglich in der Koppelaussparung 21 angeordnet. Das Führungselement 22 sitzt drehbar auf einer Hülse 23, gegen dessen von dem Anschlussring 6 wegweisende Stirnseite die von dem Bolzen 13 gehaltene Scheibe 14 wirkt. Mittels der Scheibe 14 ist die Hülse 23 in eine Hülsenbohrung 24 des Anschlussringes 11 eingepresst. Zugleich dient die Hülse 23 dem Zweck, dass zwischen der Scheibe 14 und der zu der Scheibe 14 weisenden Oberseite des Mitnehmers 8 ein gewisses, in axialer Richtung wirkendes Spiel verbleibt (s. auch Figur 5). Um einen direkten Kontakt zwischen dem Mitnehmer 8 und der zu dem Mitnehmer 8 weisenden Stirnseite des Anschlussringes 11 zu vermeiden, ist eine Gleitringscheibe 25 zwischen diesen beiden Komponenten der Drehdurchführung 4 angeordnet. Eine Übertragung der Rotationsbewegung von dem Mitnehmer 8 auf den Anschlussring 11 des Rotorteils 7 erfolgt bei dem dargestellten Ausführungsbeispiel ausschließlich über das in der Koppelaussparung 20 angeordnete Führungselement 22.

Axial gesichert ist der Mitnehmer 8 ebenfalls an seiner einen der Koppelaussparung 21 diametral gegenüberliegenden Seite durch einen eine Scheibe 14.1 tragenden Bolzen 13.1. Auch an dieser Stelle dient eine Hülse 23.1 zum Belassen des gewünschten axialen Spiels zwischen dem Mitnehmer 8 und der Achswelle 2.

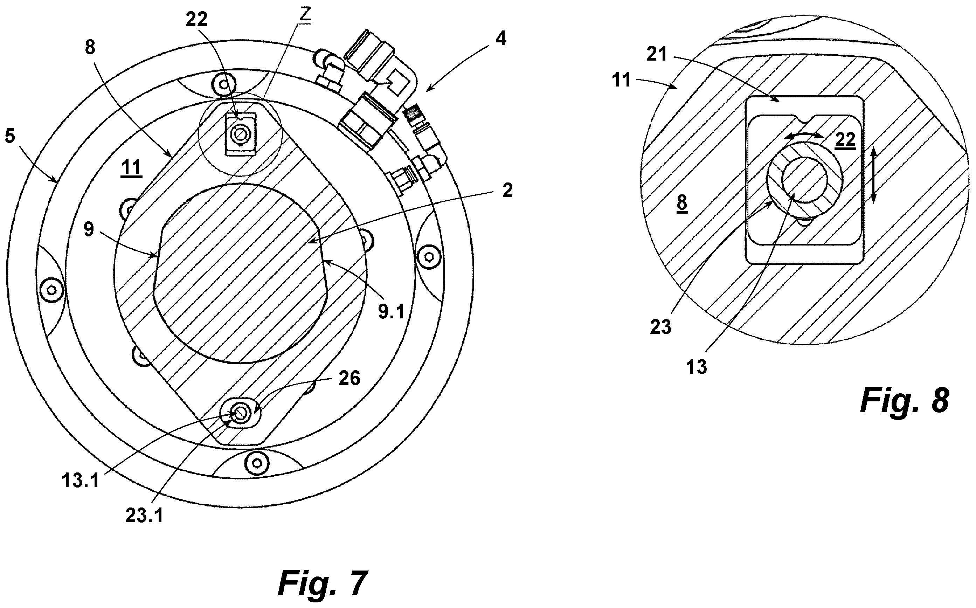

Die Koppelaussparung 21 des dargestellten Ausführungsbeispiels hat eine rechteckförmige Umrissgeometrie, wie aus den Figuren 7 und 8 erkennbar. Das in die Koppelaussparung 21 eingesetzte Führungselement 22 ist ebenfalls rechteckförmig. Während das Führungselement 22 in die Koppelaussparung 21 in Richtung der zu übertragenden Drehbewegung mehr oder weniger spielfrei einpasst, ist die radiale Erstreckung des Führungselementes 22 deutlich kürzer als die diesbezügliche Weite der Koppelaussparung 21. Das Spiel des Führungselementes 22 innerhalb der Koppelaussparung 21 in Richtung der zu übertragenden Rotation und somit in Richtung zu den beiden Langseitenwänden der Koppelaussparung 21 ist so bemessen, dass der Mitnehmer 8 in radialer Richtung gegenüber dem Führungselement 22 frei bewegt werden kann. Der mögliche Bewegungsbetrag ist durch den in radialer Richtung befindlichen Freiraum der Koppelaussparung 21 zwischen dem Führungselement 22 und den radial angeordneten Seitenwänden der Koppelaussparung 21 definiert. Dieser Freiraum ist geringfügig größer als die in radialer Richtung zu erwartenden und durch die schwimmende Drehmomentübertragung zu kompensierenden Achswellenverformungsexzentrizitäten. Bei auftretenden Achswellenverformungsexzentrizitäten kann der Mitnehmer 8 somit in radialer Richtung bewegt werden, ohne dass diese Bewegung an das Führungselement 22 und damit an das Rotorteil 7 übertragen wird. Daher ist der Abtrieb des Mitnehmers 8 gegenüber dem Rotorteil in radialer Richtung zur Drehachse der Achswelle 2 schwimmend ausgeführt.

Die axiale Bewegungsbegrenzung des Mitnehmers 8 an der der Koppelaussparung 21 gegenüberliegenden Seite durch den Bolzen 13.1 ist ebenso ausgeführt, dass die Bolzendurchgriffsöffnung 26 des Mitnehmers 8 hinreichend weit ist, damit bei einer radialen Bewegung des Mitnehmers 8 diese Bewegung nicht durch den Schaft des Bolzens 13.1 begrenzt ist. Damit ist eine schwimmende Ankopplung des Mitnehmers 8 an das Rotorteil 7 in beliebiger radialer Richtung und somit in Bewegungsrichtungen des Mitnehmers 8, die auch nur einen radialen Anteil haben, bereitgestellt. Die Dichtungen 19 sind somit von derartigen Achswellenbewegungen entkoppelt.

Der Anschlussring 11 übergreift in radialer Richtung die Rotorhülse 15 und erstreckt sich mit einem axialen Fortsatz über einen in die entgegengesetzte Richtung weisenden Fortsatz der Statorbaugruppe. Auf diese Weise ist eine in radialer Richtung wirkende Labyrinthdichtung zwischen dem Anschlussring 11 und der Statorbaugruppe 5, wie aus Figur 4 erkennbar, bereitgestellt.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Luftreifen
- 2: Achswelle
- 3: Achsrichter
- 4: Drehdurchführung
- 5: Statorbaugruppe
- 6: Rotorbaugruppe
- 7: Rotorteil
- 8: Mitnehmer
- 9, 9.1: Drehmitnahmekontur
- 10: Achswellenaussparung
- 11: Anschlussring
- 12: Spannbolzen
- 13, 13.1: Bolzen
- 14, 14.1: Scheibe
- 15: Rotorhülse
- 16: Lager
- 17: Sicherungsscheibe
- 18: Dichtung
- 19, 19.1: Dichtung
- 20, 20.1: Luftübertragungskanal
- 21: Koppelaussparung
- 22: Führungselement
- 23, 23.1: Hülse
- 24: Hülsenbohrung
- 25: Gleitringscheibe
- 26: Bolzendurchgriffsöffnung

## Patentansprüche

1. Drehdurchführung als Teil einer Reifendruckregelanlage eines Fahrzeuges, umfassend eine drehmomentschlüssig an eine ein Rad tragende Achswelle (2) des Fahrzeuges anschließbare Rotorbaugruppe (6) und eine gegenüber der Rotationsbewegung der Rotorbaugruppe (6) ortsfest angeordnete Statorbaugruppe (5), wobei sich zwischen der Rotorbaugruppe (6) und der Statorbaugruppe (5) zumindest ein abgedichteter oder abdichtbarer ringförmiger Übertragungskanal befindet, durch den für die Zwecke einer Reifendruckregelung eine Wegsamkeit zum Übertragen eines Gases von der Statorbaugruppe (5) an die Rotorbaugruppe (6) und/oder umgekehrt bereitgestellt ist, **dadurch gekennzeichnet, dass** die Rotorbaugruppe (6) ein mit radialem Abstand zur Mantelfläche der Achswelle (2) angeordnetes Rotorteil (7) mit der oder den rotorseitigen, für die Drehübertragung eines Gases erforderlichen Wegsamkeiten sowie einen drehmomentschlüssig an die Achswelle (2) anschließbaren, zur Übertragung einer Drehbewegung von der Achswelle (2) auf das Rotorteil (7) und mit diesem in radialer Richtung schwimmend in Eingriff gestellten Mitnehmer (8) umfasst und dass das Rotorteil (7) mittels eines zwischen der Statorbaugruppe (5) und dem Rotorteil (7) mit axialem Abstand zu dem Mitnehmer (8) angeordneten Lagers (16) gegenüber der Statorbaugruppe (5) zentriert ist.

2. Drehdurchführung nach Anspruch 1, **dadurch gekennzeichnet, dass** der Mitnehmer (8) mit radialem Abstand zur Mantelfläche der anzuschließenden Achswelle (2) eine zum Rotorteil (7) hin offene Koppelaussparung (21) aufweist, in die zur Drehmomentübertragung ein Führungselement (22) des Rotorteils (7) eingreift, das mit seinen in eine Rotationsrichtung weisenden Seitenflächen zum Empfangen einer Rotationsbewegung des Mitnehmers (8) ausgelegt und in radialer Richtung beweglich in der Koppelaussparung (21) angeordnet ist,
und/oder
dass das Rotorteil an seiner zum Mitnehmer weisenden Seite eine zur Drehmomentübertragung von dem Mitnehmer hin offene Koppelaussparung aufweist, in die ein nach Art eines Kulissensteins ausgelegtes Führungselement des Mitnehmers eingreift, das mit seinen in eine Rotationsrichtung weisenden Seitenflächen zum Empfangen einer Rotationsbewegung des Mitnehmers ausgelegt und in radialer Richtung beweglich in der Koppelaussparung angeordnet ist.

3. Drehdurchführung nach Anspruch 2, **dadurch gekennzeichnet, dass** das Führungselement (22) schwenkbar gelagert ist.

4. Drehdurchführung nach einem der Ansprüche 1 bis 3, **dadurch gekennzeichnet, dass** eine Übertragung der Drehbewegung zwischen dem Mitnehmer (8) und dem Rotorteil (7) lediglich über das in die Koppelaussparung (21) eingreifende Führungselement (22) erfolgt.

5. Drehdurchführung nach einem der Ansprüche 1 bis 4, **dadurch gekennzeichnet, dass** der Mitnehmer (8) der Rotorbaugruppe (6) als Scheibe mit einer Achswellenaussparung (10) ausgeführt ist.

6. Drehdurchführung nach Anspruch 5, **dadurch gekennzeichnet, dass** die Mantelfläche einer Achswelle (2), an die die Drehdurchführung (4) anzuschließen ist, mit zumindest einer Drehmitnahmekontur (9, 9.1) ausgestattet und die Umrissgeometrie der Achswellenaussparung (10) des Mitnehmers (8) komplementär zur Umrissgeometrie der Achswelle (2) mit ihrer zumindest einen Drehmitnahmekontur (9, 9.1) ausgeführt ist.

7. Drehdurchführung nach Anspruch 5 oder 6, **dadurch gekennzeichnet, dass** eine axiale Beweglichkeit des Mitnehmers (8) gegenüber dem Rotorteil (7) begrenzt ist, insbesondere durch zumindest einen am Rotorteil (7) festgelegten, den Mitnehmer (8) durchgreifenden Bolzen mit einer von diesem gehaltene Scheibe (14, 14.1).

8. Drehdurchführung nach Anspruch 7, **dadurch gekennzeichnet, dass** die axiale Beweglichkeit des Mitnehmers (8) gegenüber dem Rotorteil (7) an der der Drehmomentübertragung von Mitnehmer (8) auf das Rotorteil (7) bezüglich der Achswelle (2) gegenüberliegenden Seite des Mitnehmers (8) begrenzt ist, wobei ein an dieser Stelle eingesetzter Bolzen (13.1) mit einer von diesem getragenen Scheibe (14.1) den Mitnehmer (8) durchgreift und die Bolzendurchgriffsöffnung (26) des Mitnehmers (8) hinreichend weit ist, damit eine Beweglichkeit des Führungselementes (22) in Bewegungsrichtungen, die auch nur einen radialen Anteil aufweisen, gegenüber dem Mitnehmer (8) durch diese Bolzendurchgriffsöffnung (26) in dem Umfange einer vorgesehenen Achswellenexzentrizitätskompensation nicht begrenzt ist.

9. Drehdurchführung nach einem der Ansprüche 1 bis 8, **dadurch gekennzeichnet, dass** das zwischen der Statorbaugruppe (5) und dem Rotorteil (7) angeordnete Lager (16) als Wälzkörperlager ausgeführt ist.

10. Drehdurchführung nach Anspruch 9, **dadurch gekennzeichnet, dass** in dem Lager (16) als Wälzkörper Kugeln eingesetzt sind.

11. Drehdurchführung nach einem der Ansprüche 1 bis 10, **dadurch gekennzeichnet, dass** die Rotorbaugruppe (6) gegenüber der Statorbaugruppe (5) durch das Lager (16) axial positioniert ist.

12. Drehdurchführung nach einem der Ansprüche 1 bis 11, **dadurch gekennzeichnet, dass** die Statorbaugruppe (5) an den Achsrichter (3) einer Achswelle (2) angeflanscht ist.

13. Drehdurchführung nach Anspruch 12, **dadurch gekennzeichnet, dass** die Statorbaugruppe (5) unter Zwischenschaltung eines Adapterringes an den Achsrichter (3) einer Achswelle (2) angeschlossen ist.

14. Drehdurchführung nach einem der Ansprüche 1 bis 13, **dadurch gekennzeichnet, dass** das Rotorteil (7) eine das Lager tragenden Rotorhülse (15) und einen drehmomentschlüssig daran angeschlossenen Anschlussring (11) mit zumindest einem Anschlussstutzen zum Anschließen einer zu einem Radventil führenden Gasleitung umfasst und dass zwischen dem Anschlussring (11) und der Statorbaugruppe (5) eine in radialer Richtung wirkende Labyrinthdichtung vorgesehen ist.

15. Luftbereiftes Fahrzeug mit einer Reifendruckregelanlage, durch die der Reifendruck zumindest in zwei einander gegenüberliegenden Reifen einer Achse regelbar ist, **dadurch gekennzeichnet, dass** die diese Räder tragenden Achswellen (2) mit einer Drehdurchführung (4) nach einem oder mehreren der Ansprüche 1 bis 14 ausgeführt sind.

## Claims

1. A rotary feedthrough forming part of a tire pressure control system of a vehicle, comprising a rotor assembly (6) which can be connected in a torque-locking manner to an axle shaft (2) of the vehicle carrying a wheel and a stator assembly (5) which is arranged in a stationary manner with respect to the rotational movement of the rotor assembly (6), wherein at least one sealed or sealable annular transmission channel is arranged between the rotor assembly (6) and the stator assembly (5), through which channel there is provided, for the purposes of tire pressure control, a pathway for transferring a gas from the stator assembly (5) to the rotor assembly (6) and/or vice versa, **characterized in that** the rotor assembly (6) comprises a rotor part (7) arranged at a radial distance from the outer surface of the axle shaft (2) with the one or more rotor-side pathways required for the rotational transferring of a gas and a driver (8) which can be connected to the axle shaft (2) in a torque-locking manner in order to transmit a rotational movement from the axle shaft (2) to the rotor part (7) and which is engaged with the latter in a floating manner in the radial direction, and **in that** the rotor part (7) is centered with respect to the stator assembly (5) by means of a bearing (16) arranged between the stator assembly (5) and the rotor part (7) at an axial distance from the driver (8).

2. The rotary feedthrough according to claim 1, **characterized in that** the driver (8) has a coupling recess (21), which is open towards the rotor part (7) at a radial distance from the outer surface of the axle shaft (2) to be connected, into which, for torque transmission, a guide element (22) of the rotor part (7) engages, which guide element is designed with the side surfaces thereof pointing in a direction of rotation for receiving a rotational movement of the driver (8) and is arranged movably in the radial direction in the coupling recess (21), and/or **in that** the rotor part has an open coupling recess for torque transmission from the driver on the side thereof facing the driver, into which a guide element of the driver designed as a sliding block engages, which guide element is designed with the side surfaces thereof pointing in a direction of rotation for receiving a rotational movement of the driver and is arranged movably in the radial direction in the coupling recess.

3. The rotary feedthrough according to claim 2, **characterized in that** the guide element (22) is pivotably mounted.

4. The rotary feedthrough according to any one of claims 1 to 3, **characterized in that** the rotational movement between the driver (8) and the rotor part (7) is transmitted only via the guide element (22) engaging in the coupling recess (21).

5. The rotary feedthrough according to any one of claims 1 to 4, **characterized in that** the driver (8) of the rotor assembly (6) is designed as a disk with an axle shaft recess (10).

6. The rotary feedthrough according to claim 5, **characterized in that** the outer surface of an axle shaft (2) to which the rotary feedthrough (4) is to be connected is equipped with at least one rotary driving contour (9, 9.1) and the contour geometry of the axle shaft recess (10) of the driver (8) is designed to be complementary to the contour geometry of the axle shaft (2) with the at least one rotary driving contour (9, 9.1) thereof.

7. The rotary feedthrough according to claim 5 or 6, **characterized in that** an axial mobility of the driver (8) with respect to the rotor part (7) is limited, in particular by at least one bolt which is fixed to the rotor part (7) and engages through the driver (8) and has a disk (14, 14.1) held by the bolt.

8. The rotary feedthrough according to claim 7, **characterized in that** the axial mobility of the driver (8) with respect to the rotor part (7) is limited on the side of the driver (8) opposite the torque transmission from the driver (8) to the rotor part (7) with respect to the axle shaft (2), wherein a bolt (13.1) inserted at this point passes through the driver (8) with a disk (14.1) supported by it and the bolt passage opening (26) of the driver (8) is sufficiently wide so that mobility of the guide element (22) in directions of movement which also have only a radial component is not limited with respect to the driver (8) through this bolt passage opening (26) within the scope of a provided axle shaft eccentricity compensation.

9. The rotary feedthrough according to any one of claims 1 to 8, **characterized in that** the bearing (16) arranged between the stator assembly (5) and the rotor part (7) is designed as a rolling body bearing.

10. The rotary feedthrough according to claim 9, **characterized in that** balls are inserted in the bearing (16) as rolling bodies.

11. The rotary feedthrough according to any one of claims 1 to 10, **characterized in that** the rotor assembly (6) is positioned axially with respect to the stator assembly (5) by the bearing (16).

12. The rotary feedthrough according to any one of claims 1 to 11, **characterized in that** the stator assembly (5) is flange-mounted on the axle trumpet (3) of an axle shaft (2).

13. The rotary feedthrough according to claim 12, **characterized in that** the stator assembly (5) is connected to the axle trumpet (3) of an axle shaft (2) with interposition of an adapter ring.

14. The rotary feedthrough according to any one of claims 1 to 13, **characterized in that** the rotor part (7) comprises a rotor sleeve (15) carrying the bearing and a connecting ring (11) connected to it in a torque-locking manner and having at least one connecting piece for connecting a gas line leading to a wheel valve, and **in that** a labyrinth seal acting in the radial direction is provided between the connecting ring (11) and the stator assembly (5).

15. A pneumatic-tired vehicle with a tire pressure control system by means of which the tire pressure can be controlled at least in two tires of an axle lying opposite one another, **characterized in that** the axle shafts (2) carrying these wheels are designed with a rotary feedthrough (4) according to one or more of claims 1 to 14.

## Revendications

1. Passage tournant faisant partie d'un système de réglage de la pression des pneus d'un véhicule, comprenant un ensemble rotor (6) pouvant être raccordé de manière solidaire en rotation à un arbre d'essieu (2) du véhicule portant une roue, et un ensemble stator (5) disposé de manière fixe par rapport au mouvement de rotation de l'ensemble rotor (6), dans lequel au moins un canal de transmission annulaire étanché ou pouvant être étanché est ménagé entre l'ensemble rotor (6) et l'ensemble stator (5), par lequel est assurée, aux fins d'un réglage de la pression des pneus, une voie permettant de transmettre un gaz de l'ensemble stator (5) à l'ensemble rotor (6) et/ou inversement, **caractérisé en ce que** l'ensemble rotor (6) comprend une partie rotor (7) disposée à distance radiale de la surface périphérique de l'arbre d'essieu (2), avec le ou les passages côté rotor nécessaires à la transmission rotative d'un gaz, ainsi qu'un entraîneur (8) pouvant être raccordé de manière solidaire en rotation à l'arbre d'essieu (2), destiné à transmettre un mouvement de rotation de l'arbre d'essieu (2) à la partie rotor (7) et en prise avec celle-ci de manière flottante dans la direction radiale, et **en ce que** la partie rotor (7) est centrée par rapport à l'ensemble stator (5) au moyen d'un palier (16) disposé entre l'ensemble stator (5) et la partie rotor (7), à distance axiale de l'entraîneur (8).

2. Passage tournant selon la revendication 1, **caractérisé en ce que** l'entraîneur (8) présente, à distance radiale de la surface périphérique de l'arbre d'essieu (2) à raccorder, un évidement de couplage (21) ouvert vers la partie rotor (7), dans lequel vient en prise, pour la transmission de couple, un élément de guidage (22) de la partie rotor (7), lequel est conçu, avec ses surfaces latérales orientées dans une direction de rotation, pour recevoir un mouvement de rotation de l'entraîneur (8) et est disposé de manière mobile dans la direction radiale dans l'évidement de couplage (21),
et/ou **en ce que** la partie rotor présente, sur son côté orienté vers l'entraîneur, un évidement de couplage ouvert vers l'entraîneur pour la transmission de couple, dans lequel vient en prise un élément de guidage de l'entraîneur conçu à la manière d'un coulisseau, lequel est conçu, avec ses surfaces latérales orientées dans une direction de rotation, pour recevoir un mouvement de rotation de l'entraîneur et est disposé de manière mobile dans la direction radiale dans l'évidement de couplage.

3. Passage tournant selon la revendication 2, **caractérisé en ce que** l'élément de guidage (22) est monté de manière pivotante.

4. Passage tournant selon l'une quelconque des revendications 1 à 3, **caractérisé en ce qu'**une transmission du mouvement de rotation entre l'entraîneur (8) et la partie rotor (7) s'effectue uniquement par l'intermédiaire de l'élément de guidage (22) en prise dans l'évidement de couplage (21).

5. Passage tournant selon l'une quelconque des revendications 1 à 4, **caractérisé en ce que** l'entraîneur (8) de l'ensemble rotor (6) est réalisé sous la forme d'un disque présentant un évidement pour arbre d'essieu (10).

6. Passage tournant selon la revendication 5, **caractérisé en ce que** la surface périphérique d'un arbre d'essieu (2), auquel le passage tournant (4) doit être raccordé, est munie d'au moins un contour d'entraîneur en rotation (9, 9.1), et la géométrie de contour de l'évidement pour arbre d'essieu (10) de l'entraîneur (8) est réalisée de manière complémentaire à la géométrie de contour de l'arbre d'essieu (2) avec son au moins un contour d'entraîneur en rotation (9, 9.1).

7. Passage tournant selon la revendication 5 ou 6, **caractérisé en ce qu'**une mobilité axiale de l'entraîneur (8) par rapport à la partie rotor (7) est limitée, en particulier par au moins un boulon fixé à la partie rotor (7), traversant l'entraîneur (8) et muni d'un disque (14, 14.1) retenu par celui-ci.

8. Passage tournant selon la revendication 7, **caractérisé en ce que** la mobilité axiale de l'entraîneur (8) par rapport à la partie rotor (7) est limitée du côté de l'entraîneur (8) opposé à la transmission de couple de l'entraîneur (8) à la partie rotor (7) par rapport à l'arbre d'essieu (2), dans lequel un boulon (13.1) mis en place à cet endroit, avec un disque (14.1) retenu par celui-ci, traverse l'entraîneur (8), et l'ouverture de passage de boulon (26) de l'entraîneur (8) est suffisamment grande pour qu'une mobilité de l'élément de guidage (22) par rapport à l'entraîneur (8), dans des directions de déplacement qui présentent également une composante radiale, ne soit pas limitée par cette ouverture de passage de boulon (26) dans la mesure d'une compensation prévue d'excentricité d'arbre d'essieu.

9. Passage tournant selon l'une quelconque des revendications 1 à 8, **caractérisé en ce que** le palier (16) disposé entre l'ensemble stator (5) et la partie rotor (7) est réalisé sous la forme d'un palier à éléments roulants.

10. Passage tournant selon la revendication 9, **caractérisé en ce que** des billes sont utilisées comme éléments roulants dans le palier (16).

11. Passage tournant selon l'une quelconque des revendications 1 à 10, **caractérisé en ce que** l'ensemble rotor (6) est positionné axialement par rapport à l'ensemble stator (5) par l'intermédiaire du palier (16).

12. Passage tournant selon l'une quelconque des revendications 1 à 11, **caractérisé en ce que** l'ensemble stator (5) est raccordé par bride au carter d'essieu (3) d'un arbre d'essieu (2).

13. Passage tournant selon la revendication 12, **caractérisé en ce que** l'ensemble stator (5) est raccordé au carter d'essieu (3) d'un arbre d'essieu (2) avec interposition d'une bague d'adaptation.

14. Passage tournant selon l'une quelconque des revendications 1 à 13, **caractérisé en ce que** la partie rotor (7) comprend une douille rotor (15) portant le palier et une bague de raccordement (11) raccordée à celle-ci de manière solidaire en rotation, avec au moins un embout de raccordement destiné à raccorder une conduite de gaz menant à une valve de roue, et **en ce qu'**une étanchéité à labyrinthe agissant dans la direction radiale est prévue entre la bague de raccordement (11) et l'ensemble stator (5).

15. Véhicule à pneumatiques gonflés à l'air comprenant un système de réglage de pression des pneus, par lequel la pression des pneus peut être réglée au moins dans deux pneus opposés l'un à l'autre d'un essieu, **caractérisé en ce que** les arbres d'essieu (2) portant ces roues sont réalisés avec un passage tournant (4) selon l'une ou plusieurs des revendications 1 à 14.
